# EUROPEAN PATENT APPLICATION

(11) **EP 4 266 396 A1**
(43) Date of publication of application: **25.10.2023**
(21) Application number: 22795049.0
(22) Date of filing: 05.05.2022
(51) Int. Cl.: H01M 4/13, H01M 4/139

(54) **ELECTRODE PLATE AND PREPARATION METHOD THEREFOR, AND LITHIUM-ION BATTERY**

(30) Priority: 30.04.2021 CN 202110480435
(71) Applicant: Zhuhai CosMX Battery Co., Ltd., Zhuhai, Guangdong 519180 (CN)
(72) Inventor: ZHAI, Yanyun, Zhuhai, Guangdong 519180 (CN); ZHANG, Jian, Zhuhai, Guangdong 519180 (CN); PENG, Chong, Zhuhai, Guangdong 519180 (CN)
(74) Representative: Vossius & Partner Patentanwälte Rechtsanwälte mbB
(86) International application number: PCT/CN2022/091044
(87) International publication number: WO 2022/228580

(57) **Abstract**

An electrode sheet, a preparation method thereof, and a lithium ion battery are provided in this invention. The electrode sheet includes a current collector, an active material layer and a tab piece; the current collector comprises a base layer, and first and second conductive layers that are respectively arranged on opposite sides of the base layer; the current collector is divided into first and second zones in a first direction; the active material layer is coated on opposite sides of the current collector in the first zone, and the tab piece is connected to the second zone of the current collector; the second zone is provided with a through hole for enabling opposite sides of the current collector to be communicated with each other; one part of structure of the tab piece is connected to the first conductive layer, and the other part of structure of the tab piece extends through the through hole to a side of the current collector opposite to the first conductive layer and is connected to the second conductive layer. Mutual conduction of the conductive layers on both sides of the composite current collector can be realized in the electrode sheet provided by this invention.

## Description

### TECHNICAL FIELD

This invention relates to a technical field of a lithium ion battery, in particular to an electrode sheet and a preparation method thereof, and a lithium ion battery.

### BACKGROUND

At present, the lithium ion battery has been widely used in consumer electronics, electric vehicles, energy storage, etc. The lithium ion battery is a secondary battery (rechargeable battery) that works mainly based on movement of lithium ions between a positive electrode and a negative electrode. During charging and discharging, lithium ions are intercalated and deintercalated back and forth between the two electrodes; during the charging, lithium ions are deintercalated from the positive electrode and intercalated into the negative electrode through an electrolyte, thereby the negative electrode is in a lithium-rich state; during the discharging, it is exactly the opposite.

An aluminum foil is used as a positive electrode current collector and a copper foil is used as a negative electrode current collector in a conventional lithium-ion battery. In order to reduce a weight of the battery and increase an energy density of the battery, part of the aluminum foil or part of the copper foil of the current collectors may be replaced with a lighter polymer material. For example, a current collector having a sandwich structure such as aluminum-polymer-aluminum or copper-polymer-copper is used.

However, since the polymer layer of the current collector in the above composite structure is non-conductive, part of the structure of the current collector is separated by the polymer layer and cannot be electrically connected to a tab welded on the current collector.

### SUMMARY

This invention provides an electrode sheet and a preparation method thereof, and a lithium ion battery, so as to realize mutual conduction of conductive layers on both sides of a composite current collector.

This invention provides an electrode sheet, including a current collector, an active material layer and a tab piece, the current collector includes a base layer, a first conductive layer and a second conductive layer, the first conductive layer and the second conductive layer are respectively arranged on opposite sides of the base layer.

The current collector is divided into a first zone and a second zone in a first direction thereof; the active material layer is coated on opposite sides of the first zone of the current collector, and the tab piece is connected to the second zone of the current collector.

The second zone is provided with a through hole for enabling opposite sides of the current collector to be communicated with each other, one part of structure of the tab piece is connected to the first conductive layer, and the other part of structure of the tab piece extends through the through hole to a side of the current collector opposite to the first conductive layer and is connected to the second conductive layer.

In a possible implementation manner, in the electrode sheet provided by this invention, the tab piece includes a body and a connection part, and the body is connected to the first conductive layer.

A first end of the connection part is connected to the body, a second end of the connection part extends from the through hole to a side of the current collector opposite to the body, and the second end of the connection part is connected with the second conductive layer.

In a possible implementation manner, in the electrode sheet provided by this invention, a surface of the first conductive layer away from the base layer has a first connection area, and a surface of the second conductive layer away from the base layer has a second connection area; the first connection area and the second connection area are both connected to the tab piece to make the first conductive layer and the second conductive layer be conducted with each other, and the first connection area and the second connection area are respectively located on two sides of the through hole along the first direction.

In a possible implementation manner, in the electrode sheet provided by this invention, one end of the tab piece extends to an outside of the current collector in the first direction, and the other end of the tab piece is connected to an inside of the current collector.

In a possible implementation manner, in the electrode sheet provided by this invention, a part of the tab piece extending to the outside of the current collector in the first direction is provided with at least two tabs for charging/discharging, and the tabs are arranged at intervals along a second direction of the current collector.

The first direction is perpendicular to the second direction.

In a possible implementation manner, in the electrode sheet provided by this invention, an amount of the through hole is greater than or equal to one.

In a possible implementation manner, the electrode sheet provided by this invention further includes a protection member; the protection member covers at least one of the first connection area and the second connection area, and the protection member is located at an inner surface of the current collector.

In a possible implementation manner, in the electrode sheet provided by this invention, the through hole has an area of S 1, the second zone of the current collector has an area of S0, and an area ratio of the through hole and the second zone is in a range of 0.01≤S1/S0≤0.5.

This invention provides a preparation method of an electrode sheet, which is configured to prepare the electrode sheet according to any one of the above, including the following steps:
providing the first conductive layer and the second conductive layer on opposite sides of the base layer to form the current collector;
coating the active material layers on the opposite sides of the current collector in the first zone, and forming a through hole for enabling the opposite sides of the current collector to be communicated with each other in the second zone of the current collector;
connecting one part of structure of the tab piece to the first conductive layer, and extending the other part of structure of the tab piece through the through hole to a side of the current collector opposite to the first conductive layer and connecting it to the second conductive layer;
forming a tab in the tab piece to obtain an electrode sheet with the tab.

This invention provides a lithium ion battery, which comprises the electrode sheet according to any one of the above.

In the electrode sheet, its preparation method, and lithium ion battery provided by this invention, the first conductive layer and the second conductive layer are respectively arranged on opposite sides of the base layer to form the current collector. The current collector is divided into the first zone and the second zone in a first direction thereof; the active material layer is coated on opposite sides of the first zone of the current collector, the second zone of the current collector is provided with a through hole communicating with the opposite sides of the current collector, and the tab piece is connected to the second zone. One part of structure of the tab piece is connected to the first conductive layer of the second zone, and the other part of structure of the tab piece extends to a side of the current collector opposite to the first conductive layer through the through hole and is connected to the second conductive layer. The two-part structure of the tab piece is connected with the first conductive layer and the second conductive layer simultaneously, such that the conductive layers on both sides of the current collector are communicated with each other, ensuring the high safety and high energy density of the lithium-ion battery, meanwhile improving the electrical performance of the lithium-ion battery.

### BRIEF DESCRIPTION OF DRAWINGS

In order to more clearly illustrate the technical solutions in the embodiments of this invention or the prior art, the accompanying drawings that are required in the description of the embodiments or the prior art will be briefly introduced as follows. Obviously, the accompanying drawings in the following description are some embodiments of this invention. Those skilled in the art can also obtain other accompanying drawings based on these accompanying drawings without paying creative work.
FIG. 1 is a schematic diagram of a front structure of the electrode sheet provided by the embodiment of this invention.
FIG. 2 is a cross-sectional view at A-A in FIG. 1.
FIG. 3 is a cross-sectional view at B-B in FIG. 1.
FIG. 4 is a diagram of the steps of preparation method of the electrode sheet provided by the embodiment of this invention.
FIG. 5 is a schematic structural diagram of a cell formed by winding the electrode sheet provided by the embodiment of this invention.

Description of reference signs:
100-Current collector; 110-Base layer; 120-First conductive layer; 121-First connection area;
130-Second conductive layer; 131-Second connection area; 140-Through hole;
200 - Active material layer;
300-Tab piece; 310-Body; 320-Connection part; 330-Tab;
400 - Protection member;
500-Cell; 510-Positive electrode sheet; 520-Negative electrode sheet; 530-Separator.

### DESCRIPTION OF EMBODIMENTS

In order to make the purpose, technical solutions and advantages of the embodiments of this invention clearer, the technical solutions in the embodiments of this invention will be clearly and completely described below in conjunction with the drawings in the embodiments of this invention. Obviously, the described embodiments are part of embodiments of this invention, but not all embodiments. Based on the embodiments of this invention, all other embodiments obtained by those skilled in the art without creative efforts fall within a protection scope of this invention.

The lithium ion battery is a secondary battery (rechargeable battery) that works mainly based on movement of lithium ions between a positive electrode and a negative electrode. During charge and discharge, lithium ions are intercalated and deintercalated back and forth between the two electrodes. During the charge, lithium ions are deintercalated from the positive electrode and intercalated into the negative electrode through an electrolyte, thereby the negative electrode is in a lithium-rich state; during the discharge, the situation is opposite. As a new type of energy-storage battery, due to its advantages of high energy, long service life, low energy consumption, no harm, no memory effect, small self-discharge, low internal resistance, high cost performance, and less pollution, lithium-ion batteries are gradually showing great advantages in applications, and widely used in various fields such as mobile phone, laptop, video camera, digital camera, electric vehicle, energy storage, and aerospace.

Conventional lithium-ion batteries adopt aluminum foil as the positive electrode current collector and copper foil as the negative electrode current collector. In order to increase the energy density of the battery and reduce the weight of the battery, part of the aluminum foil and part of the copper foil of the current collector can be replaced with lighter polymer materials. For example, a current collector with a laminated structure such as aluminum-polymer-aluminum or copper-polymer-copper is used. For the current collector with this structure, when the battery experiences a short circuit, the polymer layer inside the current collector will shrink to cut off a current path in the battery after the battery is heated up to a certain temperature, so that it is not prone to burn or explode. Compared with the current collectors of conventional copper foils and aluminum foils, it has better safety.

However, the current collector polymer layer in the above composite structure is non-conductive, and welding the tab to a surface of one side of the current collector cannot allow a surface of the other side of the current collector to be conductive.

Based on this, this invention provides an electrode sheet and its preparation method, and a lithium ion battery. The conductive layers on both sides of the current collector of the electrode sheet can be conducted with each other, and lithium ions have high safety and high rate performance.

Hereinafter, this invention will be described in detail through specific embodiments.

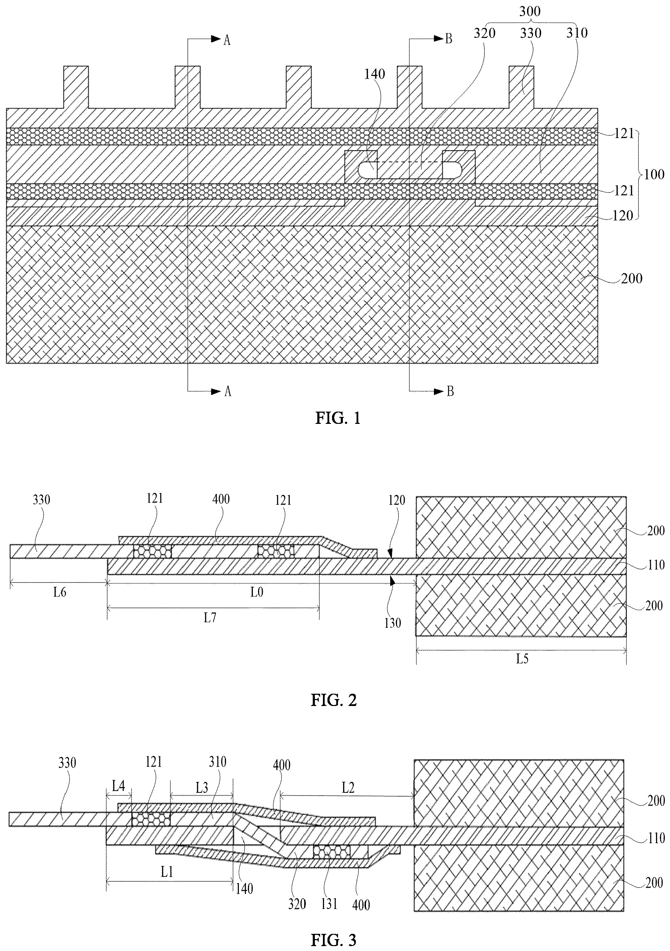

FIG. 1 is a schematic diagram of the front structure of an electrode sheet provided by an embodiment of this invention; FIG. 2 is a cross-sectional view at A-A in FIG. 1; and FIG. 3 is a cross-sectional view at B-B in FIG. 1.

As shown in FIGs. 1-3, an electrode sheet provided by this invention includes a current collector 100, an active material layer 200 and a tab piece 300. The current collector 100 includes a base layer 110, a first conductive layer 120 and a second conductive layer 130. The first conductive layer 120 and the second conductive layer 130 are respectively disposed on opposite sides of the base layer 110.

The current collector 100 is divided into a first zone and a second zone in its first direction; the active material layer 200 is coated on opposite sides of the first zone of the current collector 100, and the tab piece 300 is connected to the second zone of the current collector 100.

The second zone is provided with a through hole 140 communicating with opposite sides of the current collector 100, one part of structure of the tab piece 300 is connected to the first conductive layer 120, and the other part of structure of the tab piece 300 extends to a side of the current collector 100 opposite to the first conductive layer 120 through the through hole 140, and is connected to the second conductive layer 130.

In some embodiments, the electrode sheet includes a current collector 100, an active material layer 200, and a tab piece 300, where the current collector 100 has a laminated structure including a conductive layer and a base layer, and the base layer 110 is located in the middle of the laminated structure. A first conductive layer 120 and a second conductive layer 130 are respectively attached to the front and back sides of the base layer 110 to form the current collector 100. In order to reduce the weight of the current collector 100 and increase the energy density of the electrode sheet, the base layer 110 may have pores. In addition, providing pores in the base layer 110 and filling some conductive materials in the pores can effectively enhance the conductivity of both sides of the base layer 110, which is beneficial to improve the conductivity of the electrode sheet.

The current collector 100 is divided into two areas along a first direction of the current collector 100, namely a first zone and a second zone. The active material layer 200 is coated on the front and back sides of the first zone of the current collector 100, and the tab piece 300 is connected to the second zone of the current collector 100. The tab piece 300 is simultaneously connected with the surfaces of the first conductive layer 120 and the second conductive layer 130 in the second zone of the current collector 100 that are away from the base layer 110.

The second zone of the current collector 100 is provided with a through hole 140 for enabling the opposite sides of the current collector 100 to be communicated with each other. In this embodiment, the number and shape of the through hole 140 are not specifically limited. The number of the through hole 140 may be at least one or multiple; the through hole 140 may be, but not limited to be, rectangular, circular, polygonal and elliptical. One part of structure of the tab piece 300 is connected to the first conductive layer 120, and the other part of structure of the tab piece 300 passes through the through hole 140 and extends to the side of the current collector 100 opposite to the first conductive layer 120, and then is connected to the second conductive layer 130. The first conductive layer 120 and the second conductive layer 130 are conductively connected through the tab piece 300, so that the conductive layers on both sides of the current collector 100 are conducted to each other, improving the energy density and electrical performance of the electrode sheet. Moreover, the tab piece 300 is connected to one side of the current collector 100, and the current collector 100 is provided with the through hole 140 and a part of the structure of the tab piece 300 is connected to the conductive layer on the other side of the current collector 100 through the through hole 140, such that the conductive layers on both sides of the current collector 100 are conducted to each other, which can reduce the thickness of the welding region of the current collector 100 of the electrode sheet, and facilitate the subsequent sealing of the cell.

As shown in FIG. 2 and FIG. 3, the tab piece 300 includes a body 310 and a connection part 320, and the body 310 is connected to the first conductive layer 120. A first end of the connection part 320 is connected to the body 310, a second end of the connection part 320 extends through the through hole 140 to a side of the current collector 100 opposite to the body 310, and the second end of the connection part 320 is connected with the second conductive layer 130.

In a possible implementation, in order to facilitate a conduction of the tab piece 300 to the first conductive layer 120 and the second conductive layer 130, the tab piece 300 is cut to form a two-part structure, that is, the connection part 320 and the body 310. The body 310 is connected to the first conductive layer 120; the first end of the connection part 320 is connected to the body 310, and the second end of the connection part 320 extends to the side of the current collector 100 opposite to the body 310 after passing through the through hole 140; and the second end of the connection part 320 is connected to the second conductive layer 130. The tab piece 300 is divided into a body 310 and a connection part 320 connected to the body 310. While the body 310 is connected to the first conductive layer 120, the connection part 320 is connected to the second conductive layer 130 after passing through the through hole 140. In this way, the first conductive layer 120 and the second conductive layer 130 of the current collector 100 are connected through the body 310 and the connection part 320, which can avoid welding the tabs on the conductive layers on both sides of the current collector 100 simultaneously, so that the thickness of the welding region in the current collector 100 of the electrode sheet becomes smaller, thereby being conducive to the subsequent sealing of the cell.

As shown in FIG. 3, a surface of the first conductive layer 120 away from the base layer 110 has a first connection area 121, and a surface of the second conductive layer 130 away from the base layer 110 has a second connection area 131. The first connection area 121 and the second connection area 131 are both connected to the tab piece 300, so that the first conductive layer 120 and the second conductive layer 130 are connected, and the first connection area 121 and the second connection area 131 are respectively located on two sides of the through hole 140 along the first direction.

In order to connect the body 310 and the connection part 320 to the first conductive layer 120 and the second conductive layer 130 respectively, in some embodiments, the tab piece 300 is connected to the conductive layers on both sides of the current collector 100 using welding technology. Specifically, the first connection area 121 is provided on the surface of the first conductive layer 120 away from the base layer 110, and the body 310 of the tab piece 300 is connected to the first connection area 121 by the welding technology. The second connection area 131 is provided on the surface of the second conductive layer 110 away from the base layer 110, and the second end of the connection part 320 is connected to the second connection area 131 by the welding technology after passing through the through hole 140. In this way, the tab piece 300 is simultaneously connected to the first connection area 121 and the second connection area 131 by welding, so that the first conductive layer 120 and the second conductive layer 130 are connected to each other, where the first connection area 121 and the second connection area 131 are respectively located on two sides of the through hole 140 along the first direction.

As shown in FIGs. 1-3, one end of the tab piece 300 extends to the outside of the current collector 100 in the first direction, and the other end of the tab piece 300 is connected to the inside of the current collector 100. The part of the tab piece 300 extending to the outside of the current collector 100 in the first direction is provided with tabs 330 for charge/discharge, and the tabs 330 are arranged at intervals along a second direction of the current collector 100, and the first direction is perpendicular to the second direction.

Specifically, one end of the tab piece 300 extends out of the current collector 100 along the first direction, and the other end of the tab piece 300 is attached to the surface of the inner side of the current collector 100. The first direction may be a length direction or a width direction of the current collector 100. Preferably, when the electrode sheet is used as a winding-type battery, the first direction is the width direction of the current collector 100 on the electrode sheet, and the second direction is the length direction of the current collector 100 on the electrode sheet.

In this embodiment, in order to facilitate rapid charge/discharge of the battery, the part of the tab piece 300 extending to the outside of the width of the current collector 100 is punched and cut to form a plurality of tabs 330, and the tabs 330 are arranged at intervals along the second direction of the current collector 100. The tab 330 is used for charging/discharging the battery after being connected to an external circuit of the battery. Meanwhile, the plurality of tabs 330 can be connected to the external circuit to form multiple equivalent parallel circuits, which reduce resistance of the battery, enhance the charge/discharge capacity of the battery, and further improve the electrical performance of the battery.

As shown in FIG. 3, the number of the through holes 140 is greater than or equal to one.

In a possible manner, the number and shape of the through holes 140 are not specifically limited, and the number of the through holes 140 may be at least one or multiple; the through holes 140 may be, but is not limited to be rectangular, circular, polygonal and elliptical, etc.

As shown in FIGs. 2 and 3, the ratio of a distance L1 between the through hole 140 and an edge of the current collector 100 away from the side where the active material layer 200 is coated to the width L0 of the second zone of the current collector 100 that is not coated with the active material layer 200 has a range of 0≤L1/L0<1, and preferably a range of 0.2-0.6, which is convenient for welding and ensures that the through hole 140 has a sufficient width.

Meanwhile, a shortest distance between the through hole 140 and the edge of the first zone coated with the active material layer 200 in the current collector 100 is L2, and a length of L2 is greater than or equal to 4 mm to ensure both operability and a connection strength between the tab piece 300 and the current collector 100.

The distance between the first connection area 121 of the first conductive layer 120 and the edge of the through hole 140 is L3, and L3 is greater than or equal to 1 mm.

The distance between the first connection area 121 of the first conductive layer 120 and the outer edge of the current collector 100 is L4, and L4 is greater than or equal to 1 mm.

The width of the second zone of the current collector 100 which is not coated with the active material layer 200 is L0, and the width of the first zone of the current collector 100 coated with the active material layer 200 is L5; the ratio of L0 to L5 has a range of 0<L1 /L0<1, preferably a range of 0.1-0.4, which can ensure convenient welding operation while ensuring sufficient capacity of the battery.

The length of the tab 330 of the tab piece 300 is L6, the width of the body 310 of the tab piece 300 attached with the first conductive layer 120 is L7; the ratio of L6 to L7 has a range of 0.5<L6/L7<5, preferably a range of 1-2, which can facilitate the connection between the cell and the external circuit while ensuring the welding strength between the tab piece 300 and the current collector 100.

A total area of the through holes 140 of the current collector 100 is S1, and the area of the second zone of the current collector 100 is S0; the ratio of S1 to S0 has a range of 0.01≤S1/S0≤0.5 to ensure that the current collector 100 has sufficient strength.

As shown in FIGs. 2 and 3, the electrode sheet in this embodiment further includes a protection member 400; the protection member 400 covers at least one of the first connection area 121 and the second connection area 131, and the protection member 400 is located on the inner surface of the current collector 100.

In some embodiments, in order to avoid the internal short circuit caused by burrs piercing the separator, in which the burrs are formed in the welded area after the tab piece 300 is welded to the conductive layers on both sides of the current collector 100, the electrode sheet is protected by setting the protection member 400. The specific structure of the protection member 400 is not specifically limited here, and may be a protective adhesive tape or a protective film etc. The protection member 400 covers the first connection area 121, or the protection member covers the second connection area 131, or the protection member 400 covers both the first connection area 121 and the second connection area 131. It should be noted that no matter how the protection member covers, it is located on the inner surface of the current collector 100 and will not protrude out of the outer side of the current collector 100. The thickness of the protection member 400 is 5-50 µm, and the protection member 400 is an insulating material.

This setting of the protection member 400 can prevent the burr from piercing the electrode sheet, improving the safety performance of the electrode sheet of the battery and also increasing the connection strength at the welding area.

In this embodiment, the base layer 110 is a polymer material layer, and both the first conductive layer 120 and the second conductive layer 130 are metal layers. The active material layer 400 is constituted by the materials including an active material, a conductive agent and an adhesive agent.

Specifically, the base layer 110 is a polymer layer, and the polymer layer includes one or more of polymer materials and polymer-based composite materials. The polymer constituting the base layer 110 includes but is not limited to polyamide, polyimide, polyethylene terephthalate, polybutylene terephthalate, polyethylene naphthalate, polycarbonate, polyethylene, polypropylene, ethylene-propylene rubber, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polysulfur nitride polymer materials, polyphenylene, polypyrrole, polyaniline, polythiophene, polypyridine, cellulose, starch, protein, epoxy resin, phenolic resin, and derivatives, cross-linked substances of the above materials and copolymers of the above materials, etc.

The first conductive layer 120 and the second conductive layer 130 may be at least one of metal conductive material and carbon-based conductive material. The metal conductive material that constitutes the first conductive layer 120 and the second conductive layer 130 includes but is not limited to aluminum, copper, titanium, nickel, silver, gold, iron, nickel-copper alloy and aluminum-zirconium alloy, etc. The carbon-based conductive material that constitutes the first conductive layer 120 and the second conductive layer 130 includes but is not limited to graphite, acetylene black, graphene, carbon nanotubes, etc. The first conductive layer 120 and the second conductive layer 130 may be composed of the same metal material or alloy material, or the first conductive layer 120 and the second conductive layer 130 may be composed of different materials.

In addition, the conductive layer material is preferably a metal conductive material, that is, the conductive layer is preferably a metal conductive layer. When the current collector 100 is a positive electrode current collector, aluminum is usually used as the conductive layer material; when the current collector 100 is a negative electrode current collector, copper is usually used as the conductive layer material.

In some embodiments, a transition layer (not shown) may be provided between the first conductive layer 120 and the base layer 110 and between the second conductive layer 130 and the base layer 110; and the transition layer is configured to improve a connection strength between the first conductive layer 120 and the base layer 110 and between the second conductive layer 130 and the base layer 110 to prevent the first conductive layer 120 and the second conductive layer 130 from falling off from the base layer 110. Exemplarily, the material constituting the transition layer includes but is not limited to aluminum oxide, titanium oxide, magnesium oxide, etc.

Generally, the active material layer 400 is constituted by the materials including an active material, a conductive agent and an adhesive agent. In a specific application, when the electrode sheet is used as a positive electrode sheet, the active material may be a positive active material. The positive active material includes at least one of lithium cobalt oxide (LCO), nickel-cobalt-manganese ternary material (nickel-cobalt-manganese, NCM), nickel-cobalt-aluminum ternary material (nickel-cobalt-aluminum, NCA), nickel-cobalt-manganese-aluminum quaternary material (nickel-cobalt-manganese-aluminum, NCMA), lithium iron phosphate (LFP), lithium manganese phosphate (LMP), lithium vanadium phosphate (LVP), lithium manganate (LMO), and lithium-rich manganese-based material.

When the electrode sheet is used as a negative electrode sheet, the active material may be a negative active material. The negative active material includes at least one of graphite, mesocarbon microspheres, soft carbon, hard carbon, silicon material, silicon oxide material, silicon carbide material, and lithium titanate.

The conductive agent includes at least one of conductive carbon black, carbon nanotubes, conductive graphite, and graphene.

The adhesive agent includes at least one of polyvinylidene fluoride, vinylidene fluoride-hexafluoropropylene copolymer, polyamide, polyacrylonitrile, polyacrylate, polyacrylic acid, polyacrylate salt, carboxymethylcellulose sodium, polyvinylpyrrolidone, polyvinyl ether, polymethyl methacrylate, polytetrafluoroethylene, polyhexafluoropropylene and styrene-butadiene rubber.

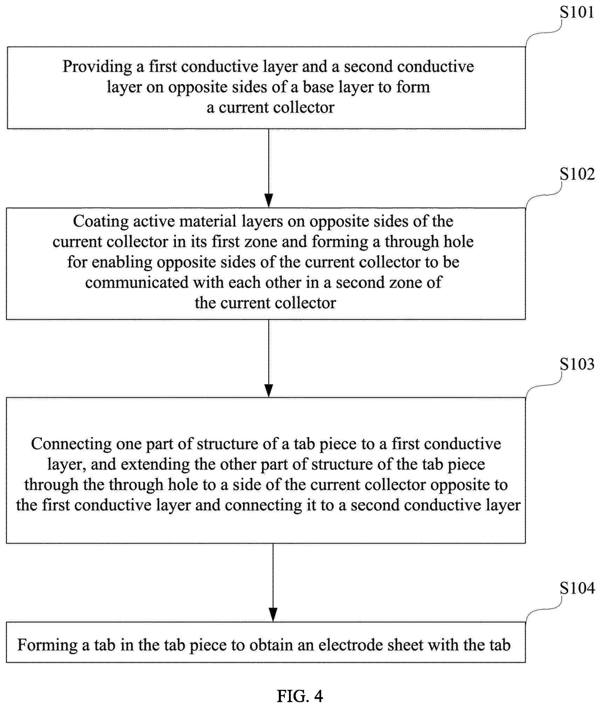

FIG. 4 is a diagram of the steps of preparation method of an electrode sheet provided by the embodiment of this invention. As shown in FIG. 4, this embodiment further provides a preparation method of the electrode sheet, which is used to prepare the above electrode sheet.

Specifically, the method includes the following steps.

S101: Providing the first conductive layer 120 and the second conductive layer 130 on the opposite sides of the base layer 110 respectively to form the current collector 100, in which the first conductive layer 120 and the second conductive layer 130 are attached on the opposite sides of the base layer 110 respectively to form the current collector 100 with a sandwich structure.

A transition layer for connection may also be provided between the first conductive layer 120 and the base layer 110 and between the second conductive layer 130 and the base layer 110.

S102: Dividing the current collector 100 into a first zone and a second zone along its first direction, coating the active material layers 200 on the opposite sides of the current collector 100 in the first zone, and forming the through hole 140 for enabling the opposite sides of the current collector 100 to be communicated with each other in the second zone of current collector 100, in which the active material layers 200 are coated on both sides of the current collector 100 in the first zone respectively, so that a current generated by the active material layer is collected into the current collector 100.

S103: Connecting one part of structure of the tab piece 300 to the first conductive layer 120; and extending the other part of structure of the tab piece 300 through the through hole 140 to a side of the current collector 100 opposite to the first conductive layer 120 and connecting it to the first conductive layer 130.

Specifically, the structure of the tab piece 300 can be cut into a body 310 and a connection part 320. The body 310 of the tab piece 300 is connected to the first conductive layer 120 of the current collector 100 in the second zone. The first end of the connection part 320 is connected to the body 310; and the second end thereof extends through the through hole 140 to the side of the base layer 110 opposite to the first conductive layer 120, and is connected to the second conductive layer 130. The connection between the body 310 and the first conductive layer 120 and the connection between the connection part 320 and the second conductive layer 130 may be performed by welding.

The first conductive layer 120 and the second conductive layer 130 on both sides of the current collector 100 can be connected and conducted through the tab piece 300, which significantly improves the conductivity of the electrode sheet.

S104: Forming a tab 330 on the tab piece 300 to form an electrode sheet with the tab 330. Specifically, a plurality of tabs 330 with a certain shape and size are formed by die-cutting the part of the tab piece 300 along the part of the current collector 100 which extends in the first direction, so as to obtain an electrode sheet welded with a plurality of tabs 330.

The charging/discharging circuit of the battery is formed after the tabs 330 are connected to the external circuit. Using the plurality of tabs 330 further significantly reduces the resistance while realizing the conduction of the conductive layers on both sides of the composite current collector 100, and improves the electrical performance of the lithium ion battery.

In the preparation method of the electrode sheet provided in this embodiment, firstly, the current collector 100 is formed after the first conductive layer 120 and the second conductive layer 130 are attached on opposite sides of the base layer 110 respectively. Then the current collector 100 is divided into the first zone and the second zone along its first direction, the active material layers 200 are coated on the opposite sides of the current collector 100 in the first zone respectively, and the through hole 140 for enabling the opposite sides of the current collector 100 to be communicated with each other is formed in the second zone of the current collector 100. Next, the first part of the structure of the tab piece 300 is connected to the first conductive layer 120; and the other part of the structure of the tab piece 300 extends through the through hole 140 to the side of the current collector 100 opposite to the first conductive layer 120, and is connected to the second conductive layer 130. Finally, the tabs 330 are formed by die-cutting the tab piece 300, and the electrode sheet with the tabs 330 is finally formed. The conductive layers on both sides of the electrode sheet current collector 100 prepared by the above method may be conducted with each other. In addition, the arrangement of the plurality of tabs 330 significantly reduces the resistance of the battery, improving the electrical performance of the battery. The base layer 110 can reduce the weight of the battery, increase the energy density of the battery and increase the safety performance of the battery.

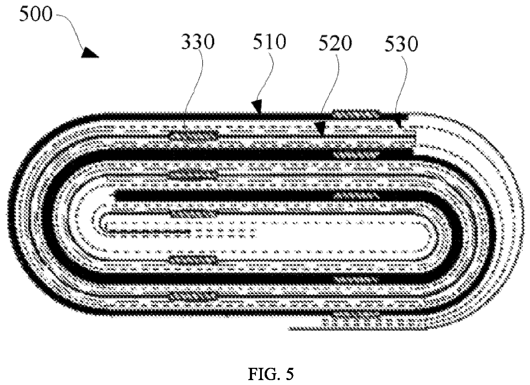

FIG. 5 is a schematic structural diagram of a cell formed by winding the electrode sheet provided by the embodiment of this invention. As shown in FIG. 5, the electrode sheet prepared by the above steps are coated with different active materials to obtain the positive electrode sheet 510 and the negative electrode sheet 520, then the positive electrode sheet 510 and the negative electrode sheet 520 are wound together with a separator 530 to obtain a cell 500, and the cell 500 is sealed, injected with electrolyte, aged, subjected to formation and capacity-grading, etc., to finally produce a lithium ion battery.

In addition, an embodiment of this invention provides a laminated battery, which is formed from the positive electrode sheet 510, the negative electrode sheet 520 and the separator 530 by successive lamination. The structure, function, preparation method and working principle of the electrode sheets have been introduced in detail in the above content, and will not be repeated here.

In order to compare and test the energy density and safety performance of the cells formed by the electrode sheets of this embodiment, two comparative cells are selected for comparative testing. The two cells were named as comparative cell 1 and comparative cell 2 respectively. The composition and structure of the cell in the embodiment, the comparative cell 1, and the comparative cell 2 are described respectively in the following.

The structure and composition of the cell in the embodiment are as follows: the positive current collector adopts an aluminum-polyethylene terephthalate-aluminum foil with a laminated structure; the active slurry of lithium cobaltate is coated on the current collector; one end of the current collector is provided with an uncoated area along its first direction, and a through hole is provided in the uncoated area. The tab piece is attached to the conductive layer on the side of the uncoated area. The tab piece above the through hole is cut to form a small tab piece with a length shorter than the through hole, which is inserted into the through hole. And then the tab piece is welded to the conductive layers on both sides of the uncoated area simultaneously. The negative current collector adopts copper foil as a foil, and the graphite active material is coated on the current collector, and the tabs are welded on the uncoated area. Then the positive electrode sheet, the negative electrode sheet, and the separator are wound to obtain a wound cell, which is sealed, injected with electrolyte, and subjected to formation, secondary sealing, and capacity grading to obtain a finished cell.

The structure and composition of the comparative cell 1 are as follows. The positive current collector adopts aluminum foil, and the active slurry of lithium cobaltate is coated on the current collector; at least one end of the current collector is provided with an uncoated area along its second direction; and the uncoated area of the positive current collector is welded with a tab. The negative current collector adopts copper foil, the graphite active material is coated on the negative current collector, and the tabs are welded on the uncoated area. Then the positive electrode sheet, the negative electrode sheet, and the separator are wound to obtain a wound cell, which is sealed, injected with electrolyte, and subjected to formation, secondary sealing, and capacity grading to obtain a finished cell..

The structure and composition of the comparative cell 2 are as follows. The positive current collector adopts aluminum-polyethylene terephthalate-aluminum foil with a laminated structure; the active slurry of lithium cobaltate is coated on the current collector; at least one end of the positive current collector is provided with an uncoated area along its second direction; and a tab is welded on the uncoated area of the positive current collector. The negative current collector adopts copper foil; the graphite active material is coated on the negative current collector, and a tab is welded on the uncoated area. Then, the positive electrode sheet, the negative electrode sheet, and the separator are wound to obtain a wound cell, which is sealed, injected with electrolyte, and subjected to formation, secondary sealing, and capacity grading to obtain a finished cell.

The internal resistance test and the heavy object impact test are carried out for the cell in the embodiment, the comparative cell 1, and the comparative cell 2, respectively (the internal resistance of the finished cell is tested by an internal resistance tester, and the heavy object impact test is performed by: taking the battery to be fully charged, arranging the cell on a plane, placing a steel column with a diameter of 15.8±0.2mm in the center of the cell, where a longitudinal axis of the steel column is parallel to the plane, and allowing a heavy object with a mass of 9.1±0.1kg to freely drop from a height of 610±25mm onto the steel column above the center of the battery.), and the following set of data is obtained finally.

**Table 1. The energy density and safety test results of the cell in the embodiment and respective comparative cells**

| Item | Internal resistance mΩ | Energy density Wh/kg | Heavy object impact with full charging (number of qualified cells/total number of tested cells) |
|---|---|---|---|
| Cell of the embodiment | 13 | 293 | 20/20 |
| Comparative cell 1 | 32 | 280 | 0/20 |
| Comparative cell 2 | 50 | 295 | 20/20 |

It can be seen from the data in Table 1 above that the cell in this embodiment has higher energy density and safety performance.

This embodiment further provides a lithium ion battery, which includes the above electrode sheet. The structure, function, preparation method and working principle of the electrode sheet of the battery have been introduced in detail in the above content, and will not be repeated here.

Finally, it should be noted that: the above embodiments are only intended to illustrate the technical solutions of this invention, rather than limiting them. Although this invention has been described in detail with reference to the foregoing embodiments, those skilled in the art should understand that: it is still possible to modify the technical solutions described in the foregoing embodiments, or perform equivalent replacements for some or all of the technical features thereof; and these modifications or replacements do not make the essence of the corresponding technical solutions depart from the scope of the technical solutions in the various embodiments of this invention.

In the description of this invention, it should be noted that unless otherwise specified and limited, the terms "installation/installing", "connection" and "connecting" should be understood in a broad sense, for example, it may be fixedly connected, or it may be connected indirectly through a middle medium, or it may be an internal communication of two elements or an interaction relationship between two elements. For those skilled in the art, the specific meanings of the above terms in this invention can be understood according to specific situations.

In the description of this invention, it should be understood that the orientation or positional relationship, which is indicated by the terms such as "above", "below", "front", "back", "vertical", "horizontal", "top", "bottom", "inner" and "outer", is based on the orientation and positional relationship shown in the drawings, which is only for the convenience of describing this invention and simplifying the description, rather than indicating or implying that the referred device or element must have a specific orientation and be constructed and operated in a particular orientation, and therefore are not understood to be limitations of the invention.

The terms "first", "second", and "third" (if any) in the description and claims of this invention and the above drawings are intended to distinguish similar objects and not necessarily to describe a specific order or precedence. It should be understood that such data used are interchangeable under appropriate circumstances such that the embodiments of the invention described herein are, for example, capable of be performed in sequences other than those illustrated or described herein.

Furthermore, the terms "comprising" and "having", as well as any variations thereof, are intended to cover a non-exclusive inclusion, for example, a process, method, system, product or maintenance tool comprising a series of steps or units are not limited to the steps or elements expressly listed. Instead, other steps or elements which are not explicitly listed or inherent to the process, method, product or maintenance tool may be included.

## Claims

1. An electrode sheet, **characterized by** comprising a current collector, an active material layer and a tab piece, wherein the current collector comprises a base layer, a first conductive layer and a second conductive layer, and the first conductive layer and the second conductive layer are arranged on opposite sides of the base layer respectively;
the current collector is divided into a first zone and a second zone in a first direction, the active material layer is coated on opposite sides of the current collector in the first zone, and the tab piece is connected to the second zone of the current collector;
the second zone is provided with a through hole for enabling the opposite sides of the current collector to be communicated with each other, one part of structure of the tab piece is connected to the first conductive layer, and the other part of structure of the tab piece extends through the through hole to a side of the current collector opposite to the first conductive layer and is connected to the second conductive layer.

2. The electrode sheet according to claim 1, wherein the tab piece comprises a body and a connection part, and the body is connected to the first conductive layer;
a first end of the connection part is connected to the body, a second end of the connection part extends from the through hole to a side of the current collector opposite to the body, and the second end of the connection part is connected with the second conductive layer.

3. The electrode sheet according to claim 2, wherein a surface of the first conductive layer away from the base layer has a first connection area, and a surface of the second conductive layer away from the base layer has a second connection area; the first connection area and the second connection area are both connected to the tab piece to make the first conductive layer and the second conductive layer be conducted with each other, and the first connection area and the second connection area are respectively located on two sides of the through hole along the first direction.

4. The electrode sheet according to claim 1, wherein one end of the tab piece extends to an outside of the current collector in the first direction, and the other end of the tab piece is connected to an inside of the current collector.

5. The electrode sheet according to claim 4, wherein a part of the tab piece extending to the outside of the current collector in the first direction is provided with at least two tabs for charging/discharging, and the tabs are arranged at intervals along a second direction of the current collector;
the first direction is perpendicular to the second direction.

6. The electrode sheet according to claim 1, wherein an amount of the through hole is greater than or equal to one.

7. The electrode sheet according to claim 3, further comprising a protection member; wherein the protection member covers at least one of the first connection area and the second connection area, and the protection member is located at an inner surface of the current collector.

8. The electrode sheet according to claim 1, wherein the through hole has an area of S1, the second zone of the current collector has an area of S0, and an area ratio of the through hole and the second zone is in a range of 0.01≤S1/S0≤0.5.

9. A preparation method of an electrode sheet for preparing the electrode sheet according to any one of claims 1-8, comprising following steps:
providing the first conductive layer and the second conductive layer on opposite sides of the base layer to form the current collector;
coating the active material layers on the opposite sides of the current collector in the first zone, and forming a through hole for enabling the opposite sides of the current collector in the second zone of the current collector;
connecting one part of structure of the tab piece to the first conductive layer, and extending the other part of structure of the tab piece through the through hole to a side of the current collector opposite to the first conductive layer and connecting it to the second conductive layer;
forming a tab on the tab piece to obtain an electrode sheet with the tab.

10. A lithium ion battery, **characterized by** comprising the electrode sheet according to any one of claims 1-8.
